# EUROPÄISCHE PATENTSCHRIFT

(11) **EP 3 701 327 B1**
(45) Veröffentlichungstag und Bekanntmachung des Hinweises auf die Patenterteilung: **15.06.2022**
(21) Anmeldenummer: 18795355.9
(22) Anmeldetag: 22.10.2018
(51) Int. Cl.: G02F 1/35, H04N 9/31

(54) **LASERLICHTQUELLE UND LASER-PROJEKTOR MIT OPTISCHEN EINRICHTUNGEN ZUR REDUZIERUNG VON SPECKLE-RAUSCHEN SOWIE VERFAHREN ZUM BETREIBEN EINER SOLCHEN LASERLICHTQUELLE UND EINES SOLCHEN LASER-PROJEKTORS**
LASER LIGHT SOURCE AND LASER PROJECTOR WITH OPTICAL DEVICES FOR REDUCING SPECKLE NOISE, AND METHOD FOR OPERATING SUCH A LASER LIGHT SOURCE AND SUCH A LASER PROJECTOR
SOURCE DE LUMIÈRE LASER ET PROJECTEUR LASER COMPRENANT DES DISPOSITIFS OPTIQUES POUR LA RÉDUCTION DU PHÉNOMÈNE PARASITE DE TAVELURES AINSI QUE PROCÉDÉ POUR FAIRE FONCTIONNER UNE TELLE SOURCE DE LUMIÈRE LASER ET UN TEL PROJECTEUR LASER

(30) Priorität: 27.10.2017 DE 102017125342
(43) Veröffentlichungstag der Anmeldung: 02.09.2020
(73) Patentinhaber: Q.ant GmbH, 70565 Stuttgart (DE)
(72) Erfinder: MANTEL, Klaus, 91083 Baiersdorf (DE); FOERTSCH, Michael, 91522 Ansbach (DE)
(74) Vertreter: Kohler Schmid Möbus Patentanwälte
(86) Internationale Anmeldenummer: PCT/EP2018/078821
(87) Internationale Veröffentlichungsnummer: WO 2019/081390

(56) Entgegenhaltungen:
- EP-A1- 3 206 081
- DE-A1- 4 432 029
- DE-A1-102008 005 129
- DE-C2- 4 432 029
- US-A- 5 117 126
- US-A- 5 663 973

## Beschreibung

Die vorliegende Erfindung betrifft eine Laserlichtquelle zur Erzeugung eines Laserstrahls, insbesondere zur specklefreien Abbildung und/oder Projektion, mit mindestens drei unterschiedlichen Wellenlängen, sowie einen Laser-Projektor mit einer solchen Laserlichtquelle. Weiterhin betrifft die vorliegende Erfindung ein Verfahren zum Betreiben einer solchen Laserlichtquelle, sowie ein Verfahren zum Betreiben eines solchen Laser-Projektors.

Herkömmliche Projektionssysteme, wie sie z. B. in gängigen Videoprojektoren eingesetzt werden, nutzen einen klassischen verflochtenen Strahlengang zur Projektion eines Gegenstands auf eine Projektionsfläche. Als Lichtquellen werden hierbei meist Metalldampflampen eingesetzt.

Seit einigen Jahren bekommen diese Projektionssysteme Konkurrenz durch Laser-Projektionssysteme, deren Einsatz schon seit den 60er Jahren vorhergesagt wurde, vgl. den Artikel "Experimental Laser Display for Large Screen Presentation", Texas Instrument Bulletin No. DLA 1324, (1966) oder US 3,436,546. Laser-Projektionssysteme bieten eine Reihe von Vorteilen: Sie lassen sich kompakt bauen, sie besitzen eine gute Helligkeit und einen guten Kontrast, eine lange Lebensdauer und sind darüber hinaus auch hinreichend preiswert. Sie sind deshalb nicht nur für den Heimkino-Markt geeignet, sondern auch z. B. für Head-Up-Displays. Laser-Projektoren übertreffen LED Projektoren in allen Details und erlauben neben der abbildenden Projektion auch eine scannende Projektion, die sich von gewöhnlichen Projektoren deutlich unterscheidet: Anstatt ein Bild auf die Leinwand zu projizieren, wird das Bild pixelweise aufgebaut. Um drei Laserstrahlen (in der Regel jeweils einen Laserstrahl für die Farben Rot, Grün, Blau) bzw. einen räumlich überlagerten Laserstrahl, bei dem die drei Teilstrahlen für die Farben Rot, Grün und Blau kollinear verlaufen, auf die jeweiligen Pixel auf der Leinwand zu lenken, wird typischerweise eine Scannereinrichtung verwendet, die einen Spiegel aufweist, dessen schnelle Achse mit einer Frequenz in der Größenordnung von etwa 30 kHz oszilliert.

Laser-Projektoren besitzen allerdings einen gravierenden Nachteil: Da Laserstrahlung kohärent ist, entsteht so genanntes Speckle-Rauschen, ein granularer (d. h. körniger) Interferenzeffekt, der die Bildqualität deutlich reduziert. Speckle-Rauschen tritt nicht nur bei Laser-Projektoren auf, sondern überall dort, wo Laser-Lichtquellen für bildgebende oder messtechnische Zwecke eingesetzt werden, etwa auch in der interferometrischen Messtechnik.

Zur Erhöhung der Bildqualität ist es daher erforderlich, Methoden einzusetzen, die das Speckle-Rauschen eliminieren oder zumindest deutlich reduzieren. Eine einfache, aber wirkungsvolle Methode zur Reduzierung des Speckle-Rauschens besteht beispielsweise darin, eine rotierende Mattscheibe zu verwenden, die aus korrugiertem Glas besteht. Wird die Mattscheibe in Bewegung versetzt (z. B. in Rotation), verändern sich die entstehenden Specklemuster. Bewegen sich diese Specklemuster dabei schnell im Vergleich zur Integrationszeit des Detektors (einer Kamera oder dem Auge), werden viele, voneinander unabhängige Speckle-Muster aufintegriert, und das Speckle-Rauschen wird reduziert. Anders betrachtet, erzeugt die Rauigkeit der Mattscheibenoberfläche Phasenfluktuationen im Lichtfeld. Sind diese Fluktuationen schneller als die Integrationszeit des Detektors, führt dies zu einer effektiven Reduktion der räumlichen Kohärenz des Lichtfeldes, und damit zu einer Reduktion der Speckle. Aufgrund der speziellen Projektor-Geometrie, bei der die Pixel einzeln beleuchtet werden, fällt diese naheliegende Methode für die Anwendung bei einem Laser-Projektor jedoch weg: Bei einer Auflösung von beispielsweise 1280 x 720 Pixeln und einer Bildwiederholrate von 60 Hz wird jedes Pixel nämlich nur für etwa 18 ns beleuchtet. Da die Speckle-Reduktion auf dieser Zeitskala erfolgen muss, erübrigt sich der Einsatz der rotierenden Mattscheibe, da die sinnvoll erreichbare Mattscheiben-Rotationsfrequenz viel zu niedrig ist: Auf der Zeitskala von Nanosekunden ist die Mattscheibe praktisch stationär.

In der Literatur wurden deshalb eine Reihe von alternativen Vorgehensweisen untersucht, um die Speckle-Problematik bei Laser-Projektoren in den Griff zu bekommen. Einen Überblick gibt die Dissertation "Speckle Reduction in Projection Systems" von F. Riechert, Univ. Karlsruhe, 2009. Ziel dieser Methoden ist es, voneinander unabhängige (d. h. dekorrelierte) Speckle-Muster inkohärent (d. h. auf Intensitätsbasis) zu überlagern. Eine Dekorrelation kann dabei etwa über Wellenlängen- oder Polarisationsdiversität erfolgen. Die für die Wellenlängendiversität nötigen Lichtquellen sind aber größer, teurer oder weniger lichtstark; zudem erweist sich der (unvorhersehbare) Einfluss der Struktur der benutzten Leinwand als problematisch. Gegen die Polarisationsdiversität spricht wieder der unbekannte Einfluss des Leinwandtyps auf die Polarisation sowie die geringe erreichbare Anzahl an unabhängigen Speckle-Mustern. Eine weitere Möglichkeit zur Speckle-Reduzierung besteht in einer Winkeldiversität der Beleuchtung. Hier ist die Zahl der erreichbaren, dekorrelierten Speckle-Muster ebenfalls begrenzt, und zwar durch das Verhältnis von Beleuchtungs- zu Beobachtungsapertur. Da die Fläche des bei der Projektion verwendeten Spiegels aufgrund der hohen zu erzeugenden Frequenzen relativ gering ist, ist auch dieses Verfahren nicht optimal für die Reduzierung des Speckle-Rauschens geeignet. Ähnliches gilt für die Verwendung räumlich getrennter Bereiche der Leinwand zur Erzeugung der dekorrelierten Specklemuster.

Um die notwendige inkohärente Superposition zu erreichen, können ebenfalls verschiedene Methoden eingesetzt werden. Zum einen können verschiedene Laserlichtquellen verwendet werden, die zueinander inkohärent sind, selbst wenn sie dieselbe Wellenlänge aufweisen (z. B. aufgrund geringer Unterschiede in der Wellenlänge, oder zufälligen Phasensprüngen). Dies erhöht allerdings wieder Kosten und Baugröße des Laser-Projektors. Auch die Verwendung orthogonaler Polarisation führt zu einer inkohärenten Superposition, allerdings mit denselben Einschränkungen wie oben. Verzögerungsstrecken als dritte Möglichkeit nutzen eine zeitliche Inkohärenz der Lichtquelle, um die Überlagerung auf dem Detektor inkohärent zu machen. Die Zahl der inkohärent überlagerten Speckle-Muster hängt dabei von der Ausführung der Verzögerungsstrecke ab. Als vierte Möglichkeit sei das zeitliche Aufintegrieren genannt, wie es jeder Detektor bei einer rotierenden Mattscheibe durchführt. Die aufgrund der Rotation der Mattscheibe unabhängigen Speckle-Muster werden während der Integrationszeit des Detektors aufsummiert, eine Interferenz dieser zeitlich nacheinander eintreffenden Muster findet nicht statt. Allerdings steht dieser Lösung die Tatsache entgegen, dass die Mittelung innerhalb von ca. 20 ns erfolgen muss, wie oben beschrieben wurde. Eine Mattscheibe mit einer entsprechenden Geschwindigkeit wäre mechanisch zu aufwändig und fehleranfällig, falls sie überhaupt zu realisieren wäre.

In der US 6,233,025 B1 werden ein Verfahren und eine Vorrichtung zum Erzeugen von mindestens drei Laserstrahlen unterschiedlicher Wellenlänge zur Darstellung von farbigen Videobildern beschrieben. Bei der Vorrichtung wird der Ausgang eines gepulsten Lasers einem Medium mit nichtlinearer optischer Charakteristik als Anregungsstrahl zugeführt. In einem Beispiel ist das nichtlineare optische Medium in einem optisch parametrischen Oszillator angeordnet. Der optisch parametrische Oszillator erzeugt zusätzlich zu dem Ausgangsstrahl, der den optisch parametrischen Oszillator ohne Frequenzänderung durchläuft, einen Signal-Strahl und einen Idler-Strahl, die - ggf. nach einer Frequenzkonversion - gemeinsam mit dem Ausgangsstrahl zur Darstellung von monochromatischen Teilbildern eines farbigen Videobildes verwendet werden. In der US 6,233,025 B1 ist angegeben, dass das Speckle-Rauschen dadurch unterdrückt werden könne, dass der gepulste Laser für die Anregung des nichtlinearen optischen Mediums Laserpulse mit einer Pulsdauer von weniger als 1 ps erzeugt.

Aus der DE 4432029 A1 ist eine lasergestützte Farbanzeige- und Projektionsvorrichtung bekannt geworden, die als Laserstrahlquelle zur Erzeugung von zumindest drei Laserstrahlen unterschiedlicher Wellenlänge einen optischparametrischen Oszillator (OPO) aufweist, dessen Signal- und Idlerstrahlen mittels optisch nichtlinearer Kristalle frequenzverdoppelt werden. Es können alternativ zwei optisch-parametrische Oszillatoren verwendet werden.

In der DE 10 2008 005 129 A1 sind ein nichtlinear-optischer Frequenzkonverter sowie Verwendungen desselben beschrieben. Der nichtlinear-optische Frequenzkonverter umfasst einen ersten optisch parametrischen Oszillator, der eine Frequenzmischereinrichtung aufweist, wobei der erste optisch parameterische Oszillator eine Einkoppeleinrichtung aufweist und wobei eine abstimmbare Strahlquelle zur Lieferung abstimmbarer Strahlung vorgesehen ist, die über die Einkoppeleinrichtung in die Frequenzmischereinrichtung einkoppelbar ist.

### Aufgabe der Erfindung

Der Erfindung liegt die Aufgabe zugrunde, eine Laserlichtquelle und einen Laser-Projektor mit einer Laserlichtquelle sowie ein Verfahren zum Betreiben einer solchen Laserlichtquelle und ein Verfahren zum Betreiben eines solchen Laser-Projektors bereitzustellen, welche eine effektive Unterdrückung von Speckle-Rauschen ermöglichen.

### Gegenstand der Erfindung

Diese Aufgabe wird erfindungsgemäß gelöst durch eine Laserlichtquelle, umfassend: mindestens drei optische Einrichtungen, insbesondere mindestens drei optisch parametrische Oszillatoren, die jeweils ein nichtlineares optisches Medium zur Erzeugung jeweils eines Signal-Strahls und eines Idler-Strahls aufweisen, sowie eine

Überlagerungseinrichtung, die ausgebildet ist, zur Erzeugung des Laserstrahls mit den mindestens drei Wellenlängen jeweils entweder den Signal-Strahl oder den Idler-Strahl der mindestens drei optischen Einrichtungen (räumlich) zu überlagern. Erfindungsgemäß wird vorgeschlagen, die Erzeugung des Laserstrahls, der beispielsweise für die Projektion in einem Laser-Projektor verwendet werden kann, mit Hilfe von mehreren, insbesondere mit Hilfe von drei optischen Einrichtungen zu realisieren, die jeweils ein nichtlineares optisches Medium aufweisen. Die optischen Einrichtungen bzw. die entsprechenden nichtlinearen Medien sind ausgebildet, die so genannte "parametric down conversion" (PDC) durchzuführen. Die PDC basiert auf der nichtlinearen Wechselwirkung eines Pump-Strahls einer kohärenten Pumpquelle (z.B. eines herkömmlichen Lasers) mit dem nichtlinearen optischen Medium (z.B. einem nichtlinearen Kristall). Bei dieser Wechselwirkung entstehen zwei neue Lichtfelder, welche in der vorliegenden Anmeldung - wie allgemein üblich - als Signal-Strahl und als Idler-Strahl bezeichnet werden. Der Signal-Strahl und der Idler-Strahl erhalten die Energie ω_{P} und den Impuls *k̅_{P}* des Pump-Strahls, d.h. es gilt für die Energie ω_{P} = ω_{S} + ω_{I}, wobei ω_{S} die Energie des Signal-Strahls und ω_{I} die Energie des Idler-Strahls bezeichnen. Entsprechend gilt für den Impuls *k̅_{P}* des Pump-Strahls, den Impuls *k̅_{S}* des Signal-Strahls und den Impuls *k_{I}* des Idler-Strahls: *k̅_{P}* = *k̅_{S}* + *k̅_{I}.* Der Signal-Strahl und der Idler-Strahl unterscheiden sich zumindest in ihrer Wellenlänge. Typischerweise wird der Strahl mit der kleineren Wellenlänge als Signal-Strahl und der Strahl mit der größeren Wellenlänge als Idler-Strahl bezeichnet. Daneben können sich der Signal-Strahl und der Idler-Strahl ggf. noch in weiteren Eigenschaften unterscheiden, dies hängt allerdings vom gewählten nichtlinearen Medium bzw. nichtlinearen Kristall sowie von der physikalischen Implementierung ab.

Bei der optischen Einrichtung, die zur Durchführung eines PDC-Prozesses in dem nichtlinearen optischen Medium verwendet wird, kann es sich beispielsweise um einen optisch parametrischen Oszillator (OPO) handeln, der beispielsweise wie in der weiter oben beschriebenen US 6,233,025 B1 ausgebildet sein kann.

Eine Laserlichtquelle mit optisch parametrischen Oszillatoren lässt sich ähnlich kompakt und kostengünstig wie eine herkömmliche Laserlichtquelle realisieren und weist eine ähnliche Helligkeit auf, d.h. diese vereint dieselben Vorteile auf sich wie eine herkömmliche Laserlichtquelle in einem Laser-Projektor.

Von einer solchen herkömmlichen Laserlichtquelle unterscheidet sich die Laserlichtquelle mit den optischen Einrichtungen bzw. mit den optisch parametrischen Oszillatoren aber in einem wesentlichen Punkt: Aufgrund des Funktionsprinzips treten im Lichtfeld am Austritt eines jeweiligen OPOs Phasenfluktuationen auf, die auf Zeitskalen der Größenordnung einer Piko-Sekunde stattfinden. Dies hängt mit der Lichterzeugung bei PDC-Systemen zusammen, die auf der weiter oben beschriebenen nichtlinearen Wechselwirkung des Pump-Strahls einer kohärenten Pumpquelle (z.B. eines herkömmlichen Lasers) mit dem nichtlinearen optischen Medium (z.B. einem nichtlinearen Kristall) basiert.

Während der Signal-Strahl und Idler-Strahl durch den gemeinsamen Entstehungsprozess in dem nichtlinearen Medium starke Korrelationen aufweisen, haben der Signal-Strahl und der Idler-Strahl für sich alleine das Fluktuationsverhalten von thermischen Lichtquellen, vgl. die Dissertation "Development of a versatile source of single photons", von M. Förtsch, Univ. Erlangen, 2015. Die Erfinder haben erkannt, dass diese Fluktuationen schnell genug sind, um beispielsweise während der oben erwähnten 20 ns, die für die Erzeugung eines Pixels zur Verfügung stehen, zu einer Mittelung von einigen 1.000 bis 10.000 unabhängigen Speckle-Mustern zu kommen, wodurch das Speckle-Rauschen praktisch vollständig eliminiert wird. Diese Lösung entspricht physikalisch der oben erwähnten Mattscheibe mit entsprechend hoher Drehzahl, wobei die Dekorrelation durch die Phasenfluktuationen entsteht und die inkohärente Superposition durch die endliche Integrationszeit des Auges oder des Detektors beim Betrachten des Bildes erreicht wird.

Im Gegensatz zur weiter oben zitierten US 6,233,025 B1 wird bei der erfindungsgemäßen Laserlichtquelle die Erzeugung des benötigten Lichts vorzugsweise mittels optisch parametrischer Oszillatoren umgesetzt, wobei insbesondere die zwei zusätzlichen Frequenzverdoppelungseinheiten entfallen. Dies ermöglicht ein deutlich effizienteres und kompakteres Gesamtsystem. Zudem wird in der US 6,233,025 B1 das Pump-Licht selbst zur Erzeugung des überlagerten Laserstrahls bzw. für ein monochromatisches Teilbild verwendet. Beim Pump-Licht treten die weiter oben beschriebenen Phasenfluktuationen aber nicht auf, d.h. es handelt sich um kohärentes Laserlicht, so dass in dem monochromatischen Teilbild, welches durch das Pump-Signal erzeugt wird, ebenfalls Speckle-Rauschen auftritt. Besonders ungeeignet ist, dass dieses Pump-Licht für das grüne Teilbild benutzt wird, für welches das menschliche Auge besonders sensitiv ist. Speckle-Rauschen bei dieser Wellenlänge wird als äußerst störend empfunden.

Typischerweise sind für die Erzeugung eines farbigen (Video-)Bildes drei unterschiedliche Wellenlängen ausreichend. Bei der Verwendung der Laserlichtquelle für einen Laser-Projektor liegen die drei Wellenlängen des Laserstrahls, der für die Projektion verwendet wird, im sichtbaren Wellenlängenbereich. Gegebenenfalls kann die Wellenlänge eines jeweiligen Signal-Strahls oder eines jeweiligen Idler-Strahls mit Hilfe einer Frequenzkonversionseinrichtung verändert werden, um die gewünschte Frequenz bzw. Wellenlänge für die Projektion zu erzeugen.

Bei den drei Wellenlängen des Laserstrahls kann es sich beispielsweise um Wellenlängen im roten Wellenlängenbereich zwischen ca. 635 nm und ca. 780 nm, im grünen Wellenlängenbereich zwischen ca. 520 nm und ca. 540 nm und im blauen Wellenlängenbereich zwischen ca. 400 nm und ca. 470 nm handeln. Grundsätzlich können aber auch andere Wellenlängen im sichtbaren Wellenlängenbereich verwendet werden, welche die Erzeugung eines farbigen Videobildes durch additive Farbmischung ermöglichen.

Um Signal-Strahlen bzw. Idler-Strahlen mit unterschiedlichen Wellenlängen zu erzeugen, können unterschiedliche nichtlineare optische Medien, insbesondere unterschiedliche nichtlineare optische Kristalle, in den optischen Einrichtungen verwendet werden. Es ist aber ebenfalls möglich, durch die Einstellung einer unterschiedlichen Temperatur eines nichtlinearen optischen Mediums bzw. Kristalls gleichen Typs die Wellenlängen des Signal-Strahls und des Idler-Strahls in gewissen Grenzen zu variieren. Hinsichtlich der Verwendung von nichtlinearen optischen Kristallen, die für die vorliegende Anwendung verwendet werden können, sei auf die eingangs zitierte US 6,233,025 B1 verwiesen.

Bei einer weiteren Ausführungsform weist die Laserlichtquelle mindestens eine Pumpquelle zur Erzeugung mindestens eines Pump-Strahls (in Form eines Laserstrahls mit einer Pump-Wellenlänge) zum Anregen der nichtlinearen optischen Medien der mindestens zwei optischen Einrichtungen auf. Für die Erzeugung der Pump-Strahlen können beispielsweise drei identische Pumpquellen in Form von Laserlichtquellen, z.B. in Form von Laser-Dioden, verwendet werden, deren Amplituden individuell eingestellt werden können, um die gewünschte Farbe für ein jeweiliges Pixel des Bildes zu erzeugen. Die Pumpquelle kann gepulst betrieben werden, wobei die Pulsfrequenz insbesondere auf eine Taktfrequenz zur Erzeugung der Pixel des Bildes abgestimmt sein kann.

Bei einer weiteren Ausführungsform weist die Laserlichtquelle im Strahlengang nach einer jeweiligen optischen Einrichtung, insbesondere in der Überlagerungseinrichtung, mindestens ein insbesondere wellenlängenselektives optisches Filter-Element zur Filterung entweder des nicht zur Überlagerung verwendeten Signal-Strahls oder des nicht zur Überlagerung verwendeten Idler-Strahls der jeweiligen optischen Einrichtung auf. Die Verwendung eines optischen Filter-Elements ist vorteilhaft bzw. erforderlich, wenn aus der jeweiligen optischen Einrichtung sowohl der Pump-Strahl, der Signal-Strahl als auch der Idler-Strahl kollinear austreten, so dass eine räumliche Trennung nicht ohne weiteres möglich ist. In diesem Fall ist es erforderlich, vor der Überlagerung den jeweils anderen, nicht zur Überlagerung verwendeten Strahl (Idler-Strahl oder Signal-Strahl) sowie den Pump-Strahl zu filtern bzw. zu eliminieren. Für die Filterung des Pump-Strahls und des Signal-Strahls bzw. des Idler-Strahls kann ein- und dasselbe wellenlängenselektive optische Element verwendet werden, es ist aber auch möglich, zu diesem Zweck zwei oder mehr als zwei unterschiedliche wellenlängenselektive optische Elemente zu verwenden. Das bzw. die wellenlängenselektiven optischen Elemente können insbesondere Teil der Überlagerungseinrichtung sein. In diesem Fall kann das wellenlängenselektive optische Element beispielsweise ausgebildet sein, nur den Signal-Strahl oder nur den Idler-Strahl in eine für die Erzeugung des Laserstrahls geeignete Richtung umzulenken. An Stelle eines wellenlängenselektiven optischen Elements kann auch eine andere Art von optischem Filterelement verwendet werden, beispielsweise ein Filterelement, welches auf einer Polarisationsfilterung oder ggf. auf einer räumlichen Filterung beruht.

Bei dem wellenlängenselektiven optischen (Filter-)Element kann es sich beispielsweise um einen dichroitischen Spiegel, um ein Prisma mit wellenlängenselektiver Beschichtung, etc. handeln. Im Gegensatz zu der hier beschriebenen Laserlichtquelle wird in der US 6,233,025 B1 kein wellenlängenselektives optisches Element benötigt, da dort sowohl der Signal-Strahl als auch der Idler-Strahl für die Erzeugung von monochromatischen Teilbildern eingesetzt werden.

Ein weiterer Aspekt der Erfindung betrifft einen Laser-Projektor, umfassend: eine Laserlichtquelle wie weiter oben beschrieben zur Erzeugung eines Laserstrahls mit mindestens drei unterschiedlichen Wellenlängen, sowie eine Scannereinrichtung zur zweidimensionalen Ablenkung des Laserstrahls zur Erzeugung des Bildes auf der Projektionsfläche. Der Laser-Projektor kann zusätzliche optische Elemente aufweisen, beispielsweise eine Fokussiereinrichtung zur Fokussierung des Laserstrahls in einem einstellbaren oder vorgegebenen Abstand, in dem sich typischerweise die Projektionsfläche befindet. Die Scannereinrichtung kann mit Hilfe einer Steuereinrichtung angesteuert werden, um ähnlich wie bei einem herkömmlichen Fernseher ein Bild mit einer Auflösung von beispielsweise 1280 x 720 Pixeln und einer Bildwiederholrate von beispielsweise 60 Hz zu erzeugen. Hierbei fährt der Laserstrahl das Bild zeilenweise in einer scannenden Bewegung ab, wobei jeweils 720 Pixel erzeugt werden. Wie weiter oben beschrieben wurde, ist es zu diesem Zweck erforderlich, eine sehr dynamische Bewegung des Laserstrahls zu erzeugen.

Alternativ zur einem Laser-Projektor, bei dem der (überlagerte) Laserstrahl mittels der Scannereinrichtung zweidimensional abgelenkt wird, um das Bild auf der Projektionsfläche zu erzeugen, kann der Laser-Projektor zwei oder mehr Scannereinrichtungen aufweisen, die jeweils den Signal-Strahl oder den Idler-Strahl einer jeweiligen optischen Einrichtung auf denselben Punkt bzw. Pixel auf der Projektionsfläche ablenken. In diesem Fall erfolgt die Überlagerung zu dem Laserstrahl mit den mindestens zwei unterschiedlichen Wellenlängen erst auf oder im Bereich der Projektionsfläche.

Bei einer Ausführungsform weist die Scannereinrichtung zur zweidimensionalen Ablenkung des Laserstrahls einen Spiegel auf. Wie weiter oben beschrieben wurde, erfordern die hohen Bildwiederholraten eine hochdynamische Bewegung bei der Ablenkung des Laserstrahls, insbesondere entlang der schnellen Achse, d.h. entlang einer jeweiligen Zeile des zu erzeugenden Bildes. An Stelle eines einzigen Spiegels kann die Scannereinrichtung ggf. auch zwei oder mehr Spiegel oder andere optische Elemente aufweisen, welche die zweidimensionale Ablenkung des Laserstrahls ermöglichen, vgl. beispielsweise die eingangs zitierte US 3,436,546, bei der zu diesem Zweck ein Polygonspiegel in Kombination mit einem oszillierenden Spiegel verwendet wird.

Bei einer weiteren Ausführungsform umfasst der Laser-Projektor eine Steuerungseinrichtung, die ausgebildet ist, die Amplituden des bzw. der Pump-Strahlen der mindestens einen Pumpquelle in Abhängigkeit von einem auf der Projektionsfläche zu erzeugenden Bild zu modulieren. Durch die Modulation der Amplitude bzw. der Leistung der Pump-Strahlen der einzelnen Pumpquellen kann wie bei einem herkömmlichen Laser-Projektor die Farbe eines jeweiligen Pixels eingestellt werden. Die Modulation bzw. die Veränderung der Leistung der Pump-Strahl(en) kann direkt in einer jeweiligen Pumpquelle, beispielsweise in Form einer Laser-Diode, vorgenommen werden. Es ist aber auch möglich, dass die Modulation in optischen Modulatoren vorgenommen wird, die im Strahlengang nach den Pumpquellen angeordnet sind, wie dies in der eingangs zitierten US 6,233,025 B1 beschrieben ist.

Die hier beschriebene Laserlichtquelle, die einen inkohärenten Laserstrahl mit mindestens drei unterschiedlichen Wellenlängen erzeugt, kann nicht nur bei einem Laser-Projektor, sondern auch bei anderen Anwendungen im Bereich der bildgebenden Technik bzw. im Bereich der interferometrischen Messtechnik vorteilhaft eingesetzt werden.

Die Aufgabe wird auch gelöst, indem ein Verfahren zum Betreiben einer Laserlichtquelle nach einer der zuvor beschriebenen Ausführungsformen durchgeführt wird. Im Rahmen des Verfahrens werden mittels einer ersten optischen Einrichtung der mindestens drei optischen Einrichtungen, einer zweiten optischen Einrichtung der mindestens drei optischen Einrichtungen und einer dritten optischen Einrichtung der mindestens drei optischen Einrichtungen jeweils ein Signal-Strahl und ein Idler-Strahl erzeugt. Dabei wird entweder der Signal-Strahl oder der Idler-Strahl der ersten optischen Einrichtung mit einer ersten Wellenlänge der mindestens zwei unterschiedlichen Wellenlängen ausgewählt, es wird entweder der Signal-Strahl oder der Idler-Strahl der zweiten optischen Einrichtung mit einer von der ersten Wellenlänge verschiedenen zweiten Wellenlänge der mindestens zwei unterschiedlichen Wellenlängen ausgewählt, und es wird entweder der Signal-Strahl oder der Idler-Strahl der dritten optischen Einrichtung mit einer von der ersten Wellenlänge und der zweiten Wellenlänge verschiedenen dritten Wellenlänge ausgewählt. Dabei wird der Laserstrahl mit den mindestens drei unterschiedlichen Wellenlängen erzeugt, indem der jeweils ausgewählte Signal-Strahl oder Idler-Strahl der ersten optischen Einrichtung, der zweiten optischen Einrichtung und der dritten optischen Einrichtung überlagert werden. Im Rahmen des Verfahrens ergeben sich insbesondere die Vorteile, die bereits in Zusammenhang mit der Laserlichtquelle und dem Laser-Projektor erläutert wurden.

Ein weiterer Aspekt der Erfindung betrifft ein Verfahren zum Betreiben eines Laser-Projektors nach einer der zuvor beschriebenen Ausführungsformen. Im Rahmen des Verfahrens wird die Laserlichtquelle mit dem Verfahren zum Betreiben der Laserlichtquelle betrieben. Im Rahmen des Verfahrens ergeben sich insbesondere die Vorteile, die bereits in Zusammenhang mit der Laserlichtquelle, dem Laser-Projektor und dem Verfahren zum Betreiben der Laserlichtquelle erläutert wurden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Laser-Projektors, der eine Laserlichtquelle zur Erzeugung eines Laserstrahls mit drei unterschiedlichen Wellenlängen für die Erzeugung eines farbigen Bildes aufweist, sowie
- Fig. 2: eine Darstellung einer Laserlichtquelle für den Laser-Projektor von Fig. 1, die zur Unterdrückung von Speckle-Rauschen einen nicht kohärenten Laserstrahl erzeugt.

In der folgenden Beschreibung der Zeichnungen werden für gleiche bzw. funktionsgleiche Bauteile identische Bezugszeichen verwendet.

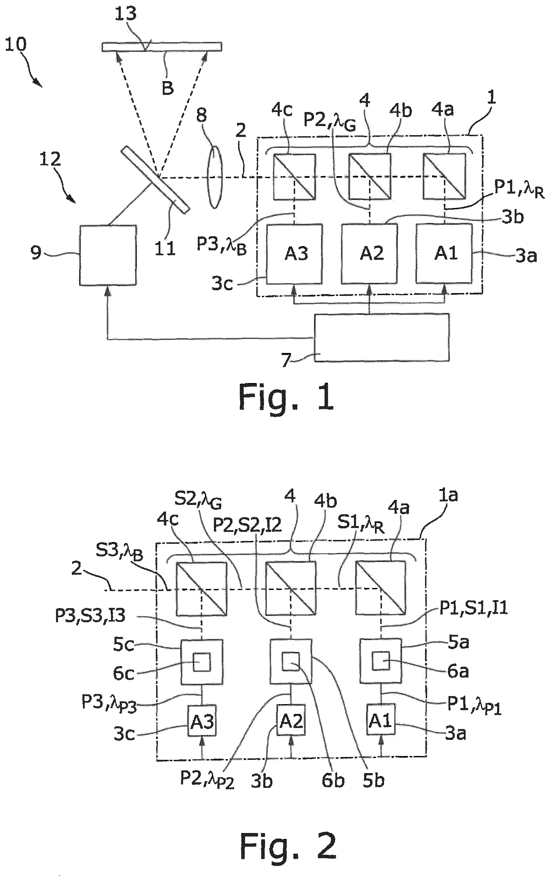

Fig. 1 zeigt einen beispielhaften Aufbau einer Laserlichtquelle 1, die drei Lichtquellen 3a-c in Form von drei Laser-Dioden aufweist. Die drei Lichtquellen 3a-c sind zur Erzeugung von drei Laserstrahlen P1, P2, P3 ausgebildet, von denen der erste Laserstrahl P1 eine Wellenlänge λ_{R} im roten Wellenlängenbereich, der zweite Laserstrahl P2 eine zweite Wellenlänge λ_{G} im grünen Wellenlängenbereich und der dritte Laserstrahl P3 eine dritte Wellenlänge λ_{B} im blauen Wellenlängenbereich aufweist. Die von den drei Lichtquellen 3a-c erzeugten drei Laserstrahlen P1, P2, P3 werden von drei verspiegelten würfelförmigen Prismen-Würfeln 4a-c jeweils um 90° umgelenkt und kollinear überlagert, so dass am Austritt der Laserlichtquelle 1 ein einziger Laserstrahl 2 mit drei unterschiedlichen Wellenlängen λ_{R}, λ_{G}, λ_{B} erzeugt wird.

Wie in Fig. 1 ebenfalls zu erkennen ist, bildet die Laserlichtquelle 1 einen Teil eines Laser-Projektors 10 zur Erzeugung eines Bildes B auf einer Projektionsfläche 13 (Leinwand). Der Laser-Projektor 10 weist für die Erzeugung des Bildes B eine Scannereinrichtung 12 mit einem Scanner-Spiegel 11 auf, der zur zweidimensionalen Ablenkung des Laserstrahls 2 um zwei Achsen drehbar ist. Für die Erzeugung einer zweidimensionalen Ablenk-Bewegung des Scanner-Spiegels 11 weist die Scannereinrichtung 12 einen Dreh-Antrieb 9 auf. Der Dreh-Antrieb 9 lenkt den Laserstrahl 2 mit einer hohen Scan-Frequenz auf die Projektionsfläche 13, um dort zeilenweise das Bild B aufzubauen.

Der Laser-Projektor 10 weist auch eine Fokussiereinrichtung 8 auf, um den Laserstrahl 2 auf der Projektionsfläche 13 zu fokussieren. Im gezeigten Beispiel handelt es sich bei der Fokussiereinrichtung 8 um eine Linse, die zwischen der Laserlichtquelle 1 und dem Scanner-Spiegel 11 angeordnet ist. Es versteht sich aber, dass die Fokussiereinrichtung 8 auch im Strahlengang des Laserstrahls 2 nach der Scannereinrichtung 12 angeordnet werden kann.

Der Laser-Projektor 10 weist zudem eine Steuerungseinrichtung 7 auf, welche die drei Lichtquellen 3a-c ansteuert, um die Amplituden A1, A2, A3 der drei Laserstrahlen P1, P2, P3 individuell zu modulieren. Die Steuerungseinrichtung 7 dient auch zur Ansteuerung des Dreh-Antriebs 9, die synchronisiert mit der Modulation der Amplituden A1, A2, A3 erfolgt, um sicherzustellen, dass an einem jeweiligen Pixel des Bildes B auf der Projektionsfläche 13 eine gewünschte Farbe erzeugt wird.

Der Laserstrahl 2 mit den drei unterschiedlichen Wellenlängen λ_{R}, λ_{G}, λ_{B}, der von der Laserlichtquelle 1 von Fig. 1 erzeugt wird, ist kohärent und führt daher zu Speckle-Rauschen des auf der Projektionsfläche 13 erzeugten Bildes B. Um das Auftreten von Speckle-Rauschen zu vermeiden bzw. um dieses möglichst weitgehend (praktisch zu 100 %) zu unterdrücken, wird in dem Laser-Projektor 10 von Fig. 1 eine Laserlichtquelle 1a zur Erzeugung eines inkohärenten Laserstrahls 2 verwendet, wie sie in Fig. 2 dargestellt ist.

Die Laserlichtquelle 1a von Fig. 2 weist drei optische Einrichtungen in Form von optisch parametrischen Oszillatoren 5a-c auf, in die drei Pump-Strahlen P1, P2, P3 eingekoppelt werden, die wie in Fig. 1 von drei Laser- bzw. Pumpquellen 3a-c in Form von Laser-Dioden erzeugt werden. Anders als in Fig. 1 werden bei der in Fig. 2 gezeigten Laserlichtquelle 1a die drei Pump-Strahlen P1, P2, P3 von drei baugleichen Laser-Dioden erzeugt, d.h. die Wellenlängen λ_{P1}, λ_{P2}, λ_{P3} der drei Pump-Strahlen P1, P2, P3 stimmen im gezeigten Beispiel überein und können beispielsweise im Bereich zwischen 350 nm und 400 nm liegen.

Die optisch parametrischen Oszillatoren 5a-c weisen jeweils ein nichtlineares optisches Medium in Form eines nichtlinearen Kristalls 6a-c auf. Bei den nichtlinearen optischen Kristallen 6a-c kann es sich beispielsweise um Lithiumtriborat-Kristalle handeln, aber auch um andere optische nichtlineare Kristalle, beispielsweise um Beta-Bariumborat (BBO). Wesentlich ist, dass in dem jeweiligen nichtlinearen Kristall ein Parametric-Down-Conversion (PDC)-Prozess stattfinden kann. Beispiele für nichtlineare Kristalle, in denen ein solcher Prozess stattfinden kann, sind in der US 6,233,025 B1 angegeben.

Bei einem PDC-Prozess tritt der jeweilige Pump-Strahl P1, P2, P3 in Wechselwirkung mit dem nichtlinearen Kristall 6a-c, wobei zwei neue Lichtfelder erzeugt werden, die nachfolgend als Signal-Strahl S1, S2, S3 und als Idler-Strahl I1, I2, I3 bezeichnet werden. Der PDC-Prozess erhält die Energie ω_{P1}, ω_{P2}, ω_{P3} und den Impuls *̅k̅*̅_{*P*1}*, k̅*_{*P*2}*, k̅*_{*P*3} des jeweiligen Pump-Strahls P1, P2, P3, d.h. es gilt für die Energie ω_{Pi} = ω_{Si} + ω_{Ii} (i = 1, 2, 3) wobei ω_{Si} die Energie des jeweiligen Signal-Strahls S1, S2, S3 bezeichnet und ω_{Ii} die Energie des jeweiligen Idler-Strahls I1, I2, I3 bezeichnet. Auch die entsprechenden Impulse bleiben erhalten, d.h. es gilt: *k̅_{Pi}* = *k̅_{Si}* + *k̅_{Ii}*.

Die drei optisch parametrischen Oszillatoren 5a-c bilden jeweils einen optischen Resonator, in dem der nichtlineare optische Kristall 6a-c angeordnet ist. Die optisch parametrischen Oszillatoren 5a-c werden unterhalb der Laserschwelle betrieben (d.h. nicht im Gain-Regime), um zu vermeiden, dass es zu einer (teilweisen) stimulierten Emission kommt, die eine ungewollte Phasenbeziehung hervorrufen würde. Beim Betrieb der optisch parametrischen Oszillatoren 5a-c unterhalb der Laserschwelle skaliert die Leistung des Signal-Strahls S1, S2, S3 bzw. des Idler-Strahls I1,I2, I3 typischerweise im Wesentlichen linear mit der Leistung des jeweiligen Pump-Strahls P1, P2, P3.

Die Energie ω_{Pi} des jeweiligen Pump-Strahls P1, P2, P3 wird bei dem PDC-Prozess auf den jeweiligen Signal-Strahl S1, S2, S3 bzw. auf den jeweiligen Idler-Strahl I1, I2, I3 aufgeteilt, d.h. der jeweilige Signal-Strahl S1, S2, S3 und der jeweilige Idler-Strahl I1,I2, I3 weisen jeweils eine vom zugehörigen Pump-Strahl P1, P2, P3 abweichende Wellenlänge auf. Durch eine geeignete Wahl des jeweiligen nichtlinearen optischen Kristalls 6a-c bzw. durch eine geeignete Einstellung z.B. der Temperatur des jeweiligen nichtlinearen optischen Kristalls 6a-c kann eine gewünschte Aufteilung der Energie ω_{Pi} der jeweiligen Pump-Strahlen P1, P2, P3 auf den jeweiligen Signal-Strahl S1, S2, S3 und den jeweiligen Idler-Strahl I1,I2, I3 erfolgen.

Die Aufteilung der Energie ω_{P} der jeweiligen Pump-Strahlen P1, P2, P3 kann insbesondere derart erfolgen, dass bei dem ersten nichtlinearen optischen Kristall 6a der Signal-Strahl S1 eine Wellenlänge λ_{R} im roten Wellenlängenbereich zwischen ca. 635 nm und ca. 780 nm aufweist. Entsprechend kann der Signal-Strahl S2, der von dem zweiten nichtlinearen Kristall 6b erzeugt wird, eine Wellenlänge λ_{G} im grünen Wellenlängenbereich, d.h. zwischen ca. 520 nm und ca. 540 nm, aufweisen. Bei der nichtlinearen Wechselwirkung in dem dritten nichtlinearen Kristall 6c kann ein dritter Signal-Strahl S3 mit einer Wellenlänge λ_{B} im blauen Wellenlängenbereich zwischen ca. 400 nm und ca. 470 nm erzeugt werden.

Bei dem in Fig. 2 gezeigten Beispiel werden die drei Signal-Strahlen S1, S2, S3, die von den drei optisch parametrischen Oszillatoren 5a-c erzeugt werden, in einer Überlagerungseinrichtung 4 überlagert, die zu diesem Zweck drei optische Elemente 4a-c in Form von würfelförmigen Prismen aufweist. In Fig. 2 handelt es sich bei den optischen Elementen 4a-c der Überlagerungseinrichtung 4 um wellenlängenselektive optische Elemente, die mit einer (jeweils unterschiedlichen) wellenlängenselektiven Beschichtung versehen sind.

An dem ersten wellenlängenselektiven Element 4a wird der erste Signal-Strahl S1 mit der roten Wellenlänge λ_{R} umgelenkt, während sowohl der erste Pump-Strahl P1 als auch der erste Idler-Strahl I1 gefiltert werden. Entsprechend wird an dem zweiten wellenlängenselektiven Element 4b der zweite Signal-Strahl S2 mit der grünen Wellenlänge λ_{G} umgelenkt, während der zweite Idler-Strahl I2 und der zweite Pump-Strahl P2 gefiltert werden. An dem dritten wellenlängenselektiven Element 4c wird der dritte Signal-Strahl S3 mit der blauen Wellenlänge λ_{B} umgelenkt, während der dritte Idler-Strahl I3 und der dritte Pump-Strahl P3 gefiltert werden.

Aufgrund der Anordnung der drei wellenlängenselektiven Elemente 4a-c in einer Linie werden die drei Signal-Strahlen S1, S2, S3 kollinear überlagert und bilden einen Laserstrahl 2, welcher drei unterschiedliche Wellenlängen λ_{R}, λ_{G}, λ_{B} im roten, im grünen und im blauen Wellenlängenbereich aufweist, um das gewünschte farbige Bild B auf der Projektionsfläche 13 zu erzeugen. Es versteht sich, dass die wellenlängenselektiven optischen Elemente 4a-c nicht zwingend einen Teil der Überlagerungseinrichtung 4 bilden müssen, sondern ggf. im Strahlengang zwischen dem jeweiligen optischen parametrischen Oszillator 5a-c und der Überlagerungseinrichtung 4 angeordnet sein können, um die jeweils unerwünschten Strahlungsanteile zu unterdrücken. An Stelle von wellenlängenselektiven optischen Elementen 4a-c können auch andere (optische) Filter-Elemente verwendet werden.

Optional kann - was in Fig. 2 nicht dargestellt ist - eine Überlagerung der drei Signal-Strahlen S1, S2, S3 auch erst auf der Projektionsfläche 13 realisiert sein. Der Laserstrahl 2 mit den drei unterschiedlichen Wellenlängen λ_{R}, λ_{G}, λ_{B} wird in diesem Fall erst auf oder im Bereich der Projektionsfläche 13 erzeugt. Dabei sind vorzugsweise alternativ zu den drei würfelförmigen Prismen 4a-c der angesprochenen Art insbesondere drei Scannereinrichtungen mit jeweils mindestens einem Scanner-Spiegel zur zweidimensionalen Ablenkung des ersten Signal-Strahls S1, des zweiten Signal-Strahls S2 und des dritten Signal-Strahls S3 vorgesehen, wobei die drei Signal-Strahlen S1, S2, S3 jeweils auf ein jeweiliges Pixel des Bildes B auf der Projektionsfläche 13 gelenkt werden. In diesem Fall bilden die drei Scannereinrichtungen eine Überlagerungseinrichtung zur Erzeugung des Laserstrahls 2 mit den drei unterschiedlichen Wellenlängen λ_{R}, λ_{G}, λ_{B}.

Wie weiter oben beschrieben wurde, wird durch den inkohärenten Laserstrahl 2, der von der in Fig. 2 gezeigten Laserlichtquelle 1a erzeugt wird, praktisch kein Speckle-Rauschen auf der Projektionsfläche 13 hervorgerufen, da die Signal-Strahlen S1, S2, S3 aufgrund ihrer Erzeugung in den nichtlinearen Kristallen 6a-c jeweils Phasenfluktuationen aufweisen, die auf Zeitskalen in der Größenordnung von Pikosekunden ablaufen. Die drei Signal-Strahlen S1, S2, S3 weisen daher jeweils das Fluktuationsverhalten von thermischen Lichtquellen auf, d.h. jeder einzelne der drei Signal-Strahlen S1, S2, S3 ist inkohärent. Im Gegensatz dazu sind ein jeweiliger Signal-Strahl S1, S2, S3 und ein jeweiliger Idler-Strahl I1,I2, I3, die gemeinsam in ein- und demselben nichtlinearen optischen Kristall 6a-c erzeugt werden, stark korreliert. Aus diesem Grund werden bei der in Fig. 2 gezeigten Laserlichtquelle 1a jeweils nur die Signal-Strahlen S1, S2, S3 der jeweiligen optisch parametrischen Oszillatoren 5a-c überlagert.

Es versteht sich, dass an Stelle der Überlagerung der Signal-Strahlen S1, S2, S3 zu dem Laserstrahl 2 auch die drei Idler-Strahlen I1, I2, I3 überlagert werden können. Ebenso ist es möglich, einen Idler-Strahl, beispielsweise den ersten Idler-Strahl I1, mit zwei Signal-Strahlen, beispielsweise mit dem zweiten und dem dritten Signal-Strahl S2, S3 zu überlagern, oder zwei der Idler-Strahlen, beispielsweise den ersten und den zweiten Idler-Strahl I1, I2 mit einem Signal-Strahl zu überlagern, beispielsweise mit dem dritten Signal-Strahl S3,

Nachfolgend wird ein Verfahren zum Betreiben der Laserlichtquelle 1a der zuvor beschriebenen Art beschrieben. Dabei wird mittels einer ersten optischen Einrichtung 5a der drei optischen Einrichtungen 5a-c, einer zweiten optischen Einrichtung 5b der drei optischen Einrichtungen 5a-c und einer dritten optischen Einrichtung 5c der drei optischen Einrichtungen 5a-c jeweils ein Signal-Strahl S1, S2, S3 und ein Idler-Strahl I1, I2, I3 erzeugt. Dabei wird entweder der Signal-Strahl S1 oder der Idler-Strahl I1 der ersten optischen Einrichtung 5a mit einer ersten Wellenlänge λ_{R} der drei unterschiedlichen Wellenlängen λ_{R}, λ_{G}, λ_{B} ausgewählt, wobei entweder der Signal-Strahl S2 oder der Idler-Strahl I2 der zweiten optischen Einrichtung 5b mit einer von der ersten Wellenlänge λ_{R} verschiedenen zweiten Wellenlänge λ_{G} der drei unterschiedlichen Wellenlängen λ_{R}, λ_{G}, λ_{B} ausgewählt wird, und wobei entweder der Signal-Strahl S3 oder der Idler-Strahl I3 der dritten optischen Einrichtung 5c mit einer von der ersten Wellenlänge λ_{R} und der zweiten Wellenlänge λ_{G} verschiedenen dritten Wellenlänge λ_{B} der drei unterschiedlichen Wellenlängen λ_{R}, λ_{G}, λ_{B} ausgewählt wird. Dabei wird der Laserstrahl 2 mit den drei unterschiedlichen Wellenlängen λ_{R}, λ_{G}, λ_{B} erzeugt, indem der jeweils ausgewählte Signal-Strahl S1, S2, S3 oder Idler-Strahl I1, I2, I3 der ersten optischen Einrichtung 5a, der zweiten optischen Einrichtung 5b und der dritten optischen Einrichtung 5c überlagert werden.

Nachfolgend wird ein Verfahren zum Betreiben eines Laser-Projektors 10 der zuvor beschriebenen Art beschrieben. Im Rahmen des Verfahrens wird die Laserlichtquelle 1a mit dem zuvor erläuterten Verfahren zum Betreiben der Laserlichtquelle 1a betrieben.

Zusammenfassend kann mit der in Fig. 2 gezeigten Laserlichtquelle 1a ein Laser-Projektor 10 realisiert werden, bei dem das Bild B praktisch frei von Speckle-Rauschen ist. Es versteht sich, dass die Laserlichtquelle 1a von Fig. 2 bzw. eine geeignet modifizierte Laserlichtquelle 1a, die beispielsweise einen Laserstrahl 2 mit nur zwei oder ggf. mit mehr als drei unterschiedlichen Wellenlängen erzeugt, auch bei anderen bildgebenden Verfahren bzw. in der Messtechnik vorteilhaft eingesetzt werden kann.

## Patentansprüche

1. Laserlichtquelle (1a) zur Erzeugung eines Laserstrahls (2), insbesondere zur specklefreien Abbildung und/oder Projektion, mit mindestens drei unterschiedlichen Wellenlängen (λ_{R}, λ_{G}, λ_{B}), umfassend:
mindestens drei optische Einrichtungen (5a-c), insbesondere mindestens drei optisch parametrische Oszillatoren (5a-c), die jeweils ein nichtlineares optisches Medium (6a-c) zur Erzeugung jeweils eines Signal-Strahls (S1, S2, S3) und eines Idler-Strahls (I1, I2, I3) aufweisen, sowie
eine Überlagerungseinrichtung (4), die ausgebildet ist, zur Erzeugung des Laserstrahls (2) mit den mindestens drei Wellenlängen (λ_{R}, λ_{G}, λ_{B}) jeweils entweder den Signal-Strahl (S1, S2, S3) oder den Idler-Strahl (I1, I2, I3) der mindestens drei optischen Einrichtungen (5a-c) zu überlagern.

2. Laserlichtquelle nach Anspruch 1, weiter umfassend: mindestens eine Pumpquelle (3a-c) zur Erzeugung mindestens eines Pump-Strahls (P1, P2, P3) zum Anregen der nichtlinearen optischen Medien (6a-c) der mindestens drei optischen Einrichtungen (5a-c).

3. Laserlichtquelle nach Anspruch 1 oder 2, die im Strahlengang nach einer jeweiligen optischen Einrichtung (5a-c) mindestens ein insbesondere wellenlängenselektives optisches Filter-Element (4a-c) zur Filterung entweder des nicht zur Überlagerung verwendeten Signal-Strahls (S1, S2, S3) oder des nicht zur Überlagerung verwendeten Idler-Strahls (I1, I2, I3) der jeweiligen optischen Einrichtung (5a-c) aufweist.

4. Laser-Projektor (10) zur Erzeugung eines insbesondere specklefreien Bildes (B) auf einer Projektionsfläche (13), umfassend: eine Laserlichtquelle (1a) nach einem der vorhergehenden Ansprüche zur Erzeugung eines Laserstrahls (2) mit mindestens drei unterschiedlichen Wellenlängen (λ_{R}, λ_{G}, λ_{B}), sowie eine Scannereinrichtung (12) zur zweidimensionalen Ablenkung des Laserstrahls (2) für die Erzeugung des Bildes (B) auf der Projektionsfläche (13).

5. Laser-Projektor nach Anspruch 4, bei welcher die Scannereinrichtung (12) zur zweidimensionalen Ablenkung des Laserstrahls (2) einen Spiegel (11) aufweist.

6. Laser-Projektor nach Anspruch 4 oder 5, weiter umfassend: eine Steuerungseinrichtung (7), die ausgebildet ist, eine Amplitude (A1, A2, A3) des Pump-Strahls (P1, P2, P3) der mindestens einen Pumpquelle (3a-c) in Abhängigkeit von dem auf der Projektionsfläche (13) zu erzeugenden Bild (B) zu modulieren.

7. Verfahren zum Betreiben einer Laserlichtquelle (1a) nach einem der Ansprüche 1 bis 3, wobei mittels einer ersten optischen Einrichtung (5a) der mindestens drei optischen Einrichtungen (5a-c), einer zweiten optischen Einrichtung (5b) der mindestens drei optischen Einrichtungen (5a-c) und einer dritten optischen Einrichtung (5a) der mindestens drei optischen Einrichtungen (5a-c) jeweils ein Signal-Strahl (S1, S2, S3) und ein Idler-Strahl (I1, I2, I3) erzeugt werden, wobei entweder der Signal-Strahl (S1) oder der Idler-Strahl (I1) der ersten optischen Einrichtung (5a) mit einer ersten Wellenlänge (λ_{R}) der mindestens drei unterschiedlichen Wellenlängen (λ_{R}, λ_{G}, λ_{B}) ausgewählt wird, wobei entweder der Signal-Strahl (S2) oder der Idler-Strahl (I2) der zweiten optischen Einrichtung (5b) mit einer von der ersten Wellenlänge (λ_{R}) verschiedenen zweiten Wellenlänge (λ_{G}) der mindestens drei unterschiedlichen Wellenlängen (λ_{R}, λ_{G}, λ_{B}) ausgewählt wird, wobei entweder der Signal-Strahl (S3) oder der Idler-Strahl (I3) der dritten optischen Einrichtung (5c) mit einer von der ersten Wellenlänge (λ_{R}) und der zweiten Wellenlänge (λ_{G}) verschiedenen dritten Wellenlänge (λ_{B}) ausgewählt wird, und wobei der Laserstrahl (2) mit den mindestens drei unterschiedlichen Wellenlängen (λ_{R}, λ_{G}, λ_{B}) erzeugt wird, indem der jeweils ausgewählte Signal-Strahl (S1, S2) oder Idler-Strahl (I1, I2) der ersten optischen Einrichtung (5a), der zweiten optischen Einrichtung (5b) und der dritten optischen Einrichtung (5c) überlagert werden.

8. Verfahren zum Betreiben eines Laser-Projektors (10) nach einem der Ansprüche 4 bis 6, wobei die Laserlichtquelle (1a) mit einem Verfahren nach Anspruch 7 betrieben wird.

## Claims

1. Laser light source (1a) for producing a laser beam (2), in particular for speckle-free imaging and/or projection, with at least three different wavelengths (λ_{R}, λ_{G}, AB), comprising:
at least three optical devices, in particular at least three optical parametric oscillators (5a-c), which each have a nonlinear optical medium (6a-c) for respectively producing a signal beam (S1, S2, S3) and an idler beam (I1, I2, I3), and
a superposition device (4), which is embodied to respectively superpose either the signal beam (S1, S2, S3) or the idler beam (I1, I2, I3) of the at least three optical devices (5a-c) for producing the laser beam (2) with the at least three wavelengths (λ_{R}, λ_{G}, λ_{B}).

2. Laser light source according to Claim 1, further comprising: at least one pump source (3a-c) for producing at least one pump beam (P1, P2, P3) for exciting the nonlinear optical media (6a-c) of the at least three optical devices (5a-c).

3. Laser light source according to claim 1 or 2, comprising, in the beam path downstream of a respective optical device (5a-c), at least one optical filter element (4a-c), in particular a wavelength-selective optical filter element, for filtering either the signal beam (S1, S2, S3) not used for the superposition or the idler beam (I1, I2, I3) not used for the superposition of the respective optical device (5a-c).

4. Laser projector (10) for producing an image (B), in particular a speckle-free image, on a projection surface (13), comprising: a laser light source (1a) according to any one of the preceding claims for producing a laser beam (2) with at least three different wavelengths (λ_{R}, λ_{G}, λ_{B}), , and
a scanner device (12) for two-dimensional deflection of the laser beam (2) for producing the image (B) on the projection surface (13).

5. Laser projector according to Claim 4, wherein the scanner device (12) for two-dimensional deflection of the laser beam (2) comprises a mirror (11).

6. Laser projector according to Claim 4 or 5, further comprising: a control device (7), which is embodied to modulate an amplitude (A1, A2, A3) of the pump beam (P1, P2, P3) of the at least one pump source (3a-c) depending on the image (B) to be produced on the projection surface (13).

7. Method for operating a laser light source (1a) according to any one of Claims 1 to34, wherein a signal beam (S1, S2, S3) and an idler beam (I1, I2, I3) are respectively produced by means of a first optical device (5a) of the at least three optical devices (5a-c), a second optical device (5b) of the at least three optical devices (5a-c) and a third optical device (5c) of the at least three optical devices (5a-c), wherein either the signal beam (S1) or the idler beam (I1) of the first optical device (5a) with a first wavelength (λ_{R}) of the at least three different wavelengths (λ_{R}, λ_{G}, λ_{B}) is selected, wherein either the signal beam (S2) or the idler beam (I2) of the second optical device (5b) with a second wavelength (λ_{G}), differing from the first wavelength (λ_{R}), of the at least three different wavelengths (λ_{R}, λ_{G}, λ_{B}), is selected, wherein either the signal beam (S3) or the idler beam (I3) of the third optical device (5c) with a third wavelength (λ_{B}) that differs from the first wavelength (λ_{R}) and the second wavelength (λ_{G}) is selected, and wherein the laser beam (2) with the at least three different wavelengths (λ_{R}, λ_{G}, λ_{B}) is produced by virtue of the respectively selected signal beam (S1, S2) or idler beam (I1, I2) of the first optical device (5a), the second optical device (5b) and the third optical device (5c) being superposed.

8. Method for operating a laser projector (10) according to any one of Claims 4 to 6, wherein the laser light source (1a) is operated with a method according to Claim 7.

## Revendications

1. Source de lumière laser (1a) destinée à générer un faisceau laser (2), notamment à la reproduction et/ou projection sans tavelures, comportant au moins trois longueurs d'onde différentes (λ_{R}, λ_{G} λ_{B}), ladite source de lumière laser comprenant :
au moins trois dispositifs optiques (5a-c), en particulier au moins trois oscillateurs optiquement paramétriques (5a-c), qui comportent chacun un milieu optique non linéaire (6a-c) destiné à générer un faisceau de signal (S1, S2, S3) et un faisceau idler (I1, I2, I3), ainsi que
un dispositif de superposition (4) qui est conçu pour générer le faisceau laser (2) comportant les au moins trois longueurs d'onde (λ_{R}, λ_{G}, λ_{B}) respectivement soit le faisceau de signal (S1, S2, S3) soit le faisceau idler (I1, I2 , I3) des au moins trois dispositifs optiques (5a-c).

2. Source de lumière laser selon la revendication 1, comprenant en outre : au moins une source de pompage (3a-c) destinée à générer au moins un faisceau de pompage (P1, P2, P3) destiné à exciter les milieux optiques non linéaires (6a-c) des au moins trois dispositifs optiques (5a-c).

3. Source de lumière laser selon la revendication 1 ou 2, qui comporte, en aval d'un dispositif optique respectif (5a-c) dans le trajet du faisceau, au moins un élément optiquement filtrant (4a-c), en particulier sélectif en termes de longueur d'onde, destiné à filtrer soit le faisceau de signal (S1, S2, S3) soit le faisceau idler (I1, I2, I3), non utilisé pour la superposition, du dispositif optique respectif (5a-c).

4. Projecteur laser (10) destiné à générer une image (B) notamment sans tavelures sur une surface de projection (13), ledit projecteur laser comprenant : une source de lumière laser (1a) selon l'une des revendications précédentes destinée à générer un faisceau laser (2) comportant au moins trois longueurs d'onde différentes (λ_{R}, λ_{G}, λ_{B}), et un dispositif de balayage (12) destiné à dévier dans deux dimensions le faisceau laser (2) destiné à générer l'image (B) sur la surface de projection (13).

5. Projecteur laser selon la revendication 4, dans lequel le dispositif de balayage (12) destiné à dévier dans deux dimensions le faisceau laser (2) comporte un miroir (11).

6. Projecteur laser selon la revendication 4 ou 5, comprenant en outre : un dispositif de commande (7) qui est conçu pour moduler une amplitude (A1, A2, A3) du faisceau de pompage (P1, P2, P3) de l'au moins une source de pompage (3a-c) en fonction de l'image (B) à générer sur la surface de projection (13).

7. Procédé de fonctionnement d'une source de lumière laser (1a) selon l'une des revendications 1 à 3, un faisceau de signal (S1, S2, S3) et un faisceau idler (I1, I2, I3) étant générés à chaque fois au moyen d'un premier dispositif optique (5a) des au moins trois dispositifs optiques (5a-c), d'un deuxième dispositif optique (5b) des au moins trois dispositifs optiques (5a-c) et d'un troisième dispositif optique (5a) des au moins trois dispositifs optiques (5a-c), soit le faisceau de signal (S1) soit le faisceau idler (I1) du premier dispositif optique (5a) comportant une première longueur d'onde (λ_{R}) des au moins trois longueurs d'onde différentes (λ_{R}, λ_{G} λ_{B}) étant sélectionné, soit le faisceau de signal (S2) soit le faisceau idler (I2) du deuxième dispositif optique (5b) comportant une deuxième longueur d'onde (λ_{G}), différente de la première longueur d'onde (λ_{R}), des au moins trois longueurs d'onde différentes (λ_{R}, λ_{G} λ_{B}) étant sélectionné, soit le faisceau de signal (S3) soit le faisceau idler (I3) du troisième dispositif optique (5c) comportant une troisième longueur d'onde (λ_{B}) différente de la première longueur d'onde (λ_{R}) et de la deuxième longueur d'onde (λ_{G}) étant sélectionné et le faisceau laser (2) comportant les au moins trois longueurs d'onde différentes (λ_{R}, λ_{G} λ_{B}) étant généré par superposition des faisceaux de signal (S1, S2) ou des faisceaux idler (I1, I2) respectivement sélectionnés des premier dispositif optique (5a), deuxième dispositif optique (5b) et troisième dispositif optique (5c).

8. Procédé destiné à faire fonctionner un projecteur laser (10) selon l'une des revendications 4 à 6, la source de lumière laser (1a) fonctionnant avec un procédé selon la revendication 7.
